# EUROPÄISCHE PATENTANMELDUNG

(11) **EP 2 452 969 A1**
(43) Veröffentlichungstag der Anmeldung: **16.05.2012**
(21) Anmeldenummer: 10190888.7
(22) Anmeldetag: 11.11.2010
(51) Int. Cl.: C08J 9/228, C08J 9/14, C08J 9/18, B29C 44/34

(54) **Verfahren zur Herstellung von expandierbaren thermoplastischen Partikeln durch Nachimprägnierung**

(71) Anmelder: BASF SE, 67056 Ludwigshafen (DE)
(72) Erfinder: Die Erfindernennung liegt noch nicht vor

(57) **Zusammenfassung**

Verfahren zur Herstellung von expandierbaren thermoplastischen Partikeln durch Nachimprägnierung

Zusammenfassung

Ein Verfahren zur Herstellung von expandierbaren, thermoplastischen Polymerpartikeln durch Nachimprägnierung von thermoplastischen Polymerpartikeln, welche mindestens ein Styrolpolymer und mindestens ein Polyolefin enthalten, mit einem Treibmittel, wobei die Nachimprägnierung überwiegend in der Gasphase durchgeführt wird.

## Beschreibung

Die Erfindung betrifft ein Verfahren zur Herstellung von expandierbaren, thermoplastischen Polymerpartikeln durch Nachimprägnierung von thermoplastischen Polymerpartikeln, welche mindestens ein Styrolpolymer und mindestens ein Polyolefin enthalten, mit einem Treibmittel,

Die WO 2009/112549 A beschreibt expandierbare thermoplastische Polymerpartikel auf Basis von Polyolefin/Styrolpolymer-Mischungen, die durch Schmelzeimprägnierung anschließender Unterwassergranulierung unter Druck erhalten werden und zu elastischen Schaumstoffen verarbeitet werden können.

Die Nachimprägnierung von Styrolpolymeren zur Herstellung von expandierbare, Polystyrol (EPS) erfolgt üblicherweise in wässriger Suspension bei höheren Temperaturen in Gegenwart eines Treibmittels. Durch die Suspensionsstabilisatoren kann die Verklebung der Granulatpartikel während der Imprägnierung verhindert werden und die Imprägnierung erfolgt bei Temperatur über 80°C ausreichend schnell. Die GB 2 162 789 A beschreib beispielsweise ein zweistufiges Herstellverfahren von expandierbaren Polystyrolpellets durch Extrusion und Strangranulierung von Polystyrolpellets, gegebenenfalls Aussiebung der Polystyrolpellets und Imprägnierung der Polystyrolpellets mit Treibmittel in wässriger Suspension.

GB 1 092 032 beschreibt die Flüssigphasenimprägnierung von Styrolpolymerisaten in Pentan bei Temperaturen zwischen 65 und 95°C. Der Zusatz von feinteiligen anorganischen Substanzen, wie Kalziumcarbonat verhindert als Trennmittel die Agglomeration der Partikel während der Imprägnierung. Die Trennmittel müssen anschließend wieder abgewaschen werden.

Eine Imprägnierung in der Gasphase ist für Styrolpolymerisate ungeeignet, da es während der Imprägnierung zu einer starken Erweichung des glasartigen Polymers kommt und die Partikel miteinander verkleben. Ursache ist die Reduktion der Glasübergangstemperatur während der Treibmittelaufnahme und die damit verbundene Erweichung des Polymers. Somit ist das Imprägnierfenster zu eng, um bei erhöhter Temperatur die Granulate in angemessener Zeit wirtschaftlich zu beladen. Eine Beladung ist dann nur noch durch Zugabe von anorganischem Trennmittel möglich, die aber nach der Imprägnierung auf den Partikeln haften bleiben und bei einer späteren Verarbeitung die Verschweißung der Schaumstoffpartikel verschlechtern und somit zu einer Verschlechterung der mechanischen Eigenschaften führen.

Hingegen ist bei teilkristallinen Polymeren die Flüssig- oder Gasphasenimprägnierung bekannt. Eine Verklebung der Polymerpartikel erfolgt hier erst oberhalb des Schmelzpunkts und die Treibmittelaufnahme findet über den amorphen Teil des teilkristallinen Polymers ausreichend schnell statt. Ein Nachteil bei teilkristallinen Polymeren, wie Polyolefinen, ist allerdings, dass diese das Treibmittel unter üblichen Lagerbedingungen schnell abgeben und direkt im Anschluss an die Treibmittelbeladung expandiert werden müssen.

Aus EP 1 535 955 B1 ist die Imprägnierung von Polyolefinpolymerisaten durch Überschichten mit Pentan zur Herstellung von expandierbaren Polyolefinpartikeln bekannt. Aufgrund der Kristallinität der Polyolefine weisen expandierbare Polyolefinpartikel in der Regel ein geringes Treibhaltevermögen auf.

Die DE 33 17 557 A1 beschreibt ein Verfahren zur Herstellung von expandierbaren Polyolefinpartikel durch Imprägnierung von Polyolefinenpartikeln im Fluidstadium mit einer Mischung eines Treibmittels und einer Treibhilfe in der Gasphase. Zur Verbesserung des Treibmittelhaltevermögens werden mit Styrol gepfropfte Polyolefine eingesetzt.

Die DE 44 29 844 A1 beschreibt ein Verfahren zur Herstellung von expandierten, Polyolefinschaumpartikeln durch Imprägnierung von Polyolefinpartikeln mit gasförmigen Treibmitteln in einer Wirbelschicht und anschließender schlagartiger Entspannung des Inhalts des Imprägnierreaktors.

Aufgabe der vorliegenden Erfindung war es, ein einfaches und schnelles Verfahren zur Herstellung von expandierbaren thermoplastischen Partikeln von insbesondere mehrphasigen Mischungen aus Polyolefinen und Styrolpolymeren zu finden, bei dem das Treibmittel bei der Imprägnierung homogen aufgenommen wird und nach dem Verschäumen zu Schaumpartikeln mit homogener Zellstruktur führt.

Demgemäß wurde ein Verfahren zur Herstellung von expandierbaren, thermoplastischen Polymerpartikeln durch Nachimprägnierung von thermoplastischen Polymerpartikeln, welche mindestens ein Styrolpolymer und mindestens ein Polyolefin enthalten, mit einem Treibmittel gefunden, wobei die Nachimprägnierung überwiegend in der Gasphase durchgeführt wird.

Unter Imprägnierung versteht man die Beladung des Polymersystems mit dem Treibmittel, das Treibmittel ist dabei im Polymersystem verteilt. Imprägnierungen kann man durchführen in der flüssigen und / oder gasförmigen Treibmittelphase. Zusätzlich können die können die Phasenübergänge zwischen gasförmiger und flüssiger Phase fliesend sein.

Als Treibmittel werden bevorzugt aliphatische C₃ - C₇-Kohlenwasserstoffe, insbesondere n-Pentan und iso-Pentan oder Mischungen davon eingesetzt werden.

In der gasförmigen Treibmittelphase ist das Treibmittel homogen in der Atmosphäre verteilt und wird sehr gleichmäßig von dem zu imprägnierenden Granulat aufgenommen. Dadurch wird eine lokale Erweichung und damit Verklebung verringert. In der gasförmigen Treibmittelphase lässt sich die Treibmittelaufnahme somit besser steuern. Liegt das Treibmittel bei der Beladung flüssig vor, ist die Treibmittelaufnahme schwerer zu steuern und der Gradient bei der Imprägnierung ist höher. Der Effekt kann aber durch entsprechende zeitliche Reifung ausgeglichen werden. So ist es möglich ein gasdichtes Metallfass mit Granulat und flüssigem Pentan zu befüllen und gasdicht zu verschließen. Durch anschließende Reifung verteilt sich das Treibmittel über die Zeit homogen und es werden gleichmäßig expandierbare Granulate erhalten.

Der Imprägnierkessel ist dadurch gekennzeichnet, dass er für das verwendete Treibmittelsystem gasdicht ist und bei gegebener Temperatur den dazugehörigen Dampfdruck aufbaut. Der Imprägnierkessel kann z.B. aus Glas oder Metall gefertigt sein.

Die Gasphasen-Imprägnierung kann wie folgt durchgeführt werden.

Der mit Flüssigpentan gefüllte Verdampfer wird im Wasserbad auf Versuchstemperatur gebracht. Das Ventil ist geschlossen. Im Verdampfer stellt sich der zur Temperatur gehörige Dampfdruck ein. Der Imprägnierkessel wird auf 5°C, das Heizband auf 10°C über der Versuchstemperatur erwärmt. Der Imprägnierkessel wird auf unter 0,1 bar evakuiert. Nach Erreichen konstanter Temperatur-Werte wird das Ventil geöffnet. Das Pentan strömt gasförmig in den Kessel und wird vom Granulat aufgenommen. Nach einer festgelegten Zeit wird das Ventil geschlossen. Das in der Atmosphäre des Kessels vorhandene gasförmige Pentan wird bis zum thermodynamischen Gleichgewicht vom Polymer aufgenommen. Das Granulat wird im Anschluss entnommen. Der Pentangehalt im Granulat ist von der Begasungszeit und der Versuchstemperatur abhängig.

Die Imprägnierung wird überwiegend in der Gasphase, bevorzugt ausschließlich in der Gasphase durchgeführt. Aus praktischen Gründen können jedoch zeitweise und/oder an einigen Stellen des Imprägniergefäßes ein Teil der zu imprägnierenden thermoplastischen Partikel in einer flüssigen Treibmittelphase befinden.

Der mit Flüssigpentan gefüllte Verdampfer wird im Wasserbad auf Versuchstemperatur gebracht. Das Ventil ist geschlossen. Im Verdampfer stellt sich der zur Temperatur gehörige Dampfdruck ein. Der Imprägnierkessel wird auf eine geringere oder gleiche Temperatur als die Versuchstemperatur, das Heizband auf 10°C über die Versuchstemperatur erwärmt. Der Imprägnierkessel wird auf unter 0,1 bar evakuiert. Nach Erreichen konstanter Temperatur-Werte wird das Ventil geöffnet. Das Pentan strömt gasförmig in den Kessel, kondensiert dort teilweise und wird vom Granulat aufgenommen. Nach einer festgelegten Zeit wird das Ventil geschlossen. Das in der Atmosphäre des Kessels vorhandene gasförmige Pentan, sowie das kondensierte Pentan werden bis zum thermodynamischen Gleichgewicht oder bis zum Abbruch des Versuchs vom Polymer aufgenommen. Das Granulat wird im Anschluss entnommen. Der Pentangehalt im Granulat ist von der Begasungszeit, der Menge des Pentans, der Temperaturdifferenz und der Versuchstemperatur abhängig.

Der Imprägnierkessel kann auch mit einer definierten Menge Flüssigpentan gefüllt werden. Der Siebboden verhindert einen direkten Kontakt zwischen Granulat und Pentan. Die Maschenweite ist kleiner als der geringste Granulat-Durchmesser der Schüttung. Der Imprägnierkessel wird auf Versuchstemperatur gebracht wodurch sich der dazugehörige Dampfdruck einstellt. Das in der Atmosphäre des Kessels vorhandene gasförmige Pentan wird bis zum thermodynamischen Gleichgewicht oder bis zum Abbruch des Versuchs vom Polymer aufgenommen. Nach einer definierten Zeit wird das restliche Pentan abgesaugt und das Granulat entnommen. Der Pentangehalt im Granulat ist von der Menge des Pentans, der Begasungszeit und der Versuchstemperatur abhängig.

Die Nachimprägnierung wird bevorzugt bei einer Temperatur im Bereich von 30 bis 80°C, besonders bevorzugt 40 bis 50°C durchgeführt. Die Begasungsdauer liegt bevorzugt im Bereich von 5 bis 180 Minuten, besonders bevorzugt im Bereich von 50 bis 100 Minuten.

Die Nachimprägnierung wird bevorzugt in einer Wirbelschicht durchgeführt.

Das erfindungsgemäße Verfahren eignet sich insbesondere für thermoplastischen Polymerpartikel, die Hohlräume mit einem mittleren Durchmesser im Bereich von 0,1 bis 50 µm, bevorzugt 1 bis 30 µm aufweisen.

Bevorzugt weisen die zur Nachimprägnierung eingesetzten thermoplastischen Polymerpartikeln einen mittleren Durchmesser im Bereich von 0,2 bis 2,5 mm und 50 bis 300, bevorzugt 70 bis 150 Hohlräume/mm² Querschnittsfläche auf. Die Anzahl der Hohlräume kann beispielsweise durch Auszählen eines Dünnschnitts durch die Polymerpartikel unter einem optischen Mikroskop erfolgen.

Ihre Schüttdichte liegt bevorzugt im Bereich von 500 bis 590, bevorzugt 520 bis 580 kg/m³.

Die zur Nachimprägnierung eingesetzten thermoplastischen Polymerpartikel weisen bevorzugt mindestens eine disperse, polyolefinreiche Phase P1 und eine kontinuierliche styrolpolymer-reiche Phase aufweisen.

Besonders bevorzugt enthalten die zur Nachimprägnierung eingesetzten thermoplastischen Polymerpartikel
A) 45 bis 98,9 Gewichtsprozent eines Styrolpolymeren,
B1) 1 bis 45 Gewichtsprozent eines Polyolefins mit einem Schmelzpunkt im Bereich von 105 bis 140°C,
B2) 0 bis 25 Gewichtsprozent eines Polyolefins mit einem Schmelzpunkt unter 105°C,
C1) 0,1 bis 25 Gewichtsprozent eines Styrol-Butadien- oder Styrol-Isopren-Blockcopolymeren,
C2) 0 bis 10 Gewichtsprozent eines Styrol-Ethylen-Butylen-Blockcopolymeren, jeweils bezogen die eingesetzten thermoplastischen Polymerpartikel, enthalten.

Die bevorzugt eingesetzten Hohlräume enthaltenden Polymerpartikel können durch Extrusion einer Polymerschmelze durch eine Düsenplatte und Granulierung in einer flüssigkeitsgefüllten Kammer unter einem Druck im Bereich von 1,5 bis 15 bar, durchführt , wobei die Polymerschmelze
0,1 bis 5 Gew.-%, bevorzugt 0,3 bis 1,0 Gew.-% eines Nukleierungsmittels D),
0,01 bis 5 Gew.-%, bevorzugt 0,05 bis 1 Gew.-% eines die Hohlräume bildenden Gases F),
ausgewählt aus Stickstoff, Kohlendioxid, Argon, Helium oder Mischungen davon jeweils bezogen auf die Polymerschmelze.

Besonders bevorzugt werden in dem erfindungsgemäßen Verfahren die zur Nachimprägnierung eingesetzten thermoplastischen Polymerpartikel eingesetzt, die erhalten werden durch Extrusion und Granulierung einer treibmittelhaltigen Polymerschmelze welche
A) 45 bis 98,79 Gewichtsprozent eines Styrolpolymeren,
B1) 1 bis 45 Gewichtsprozent eines Polyolefins mit einem Schmelzpunkt im Bereich von 105 bis 140°C,
B2) 0 bis 25 Gewichtsprozent eines Polyolefins mit einem Schmelzpunkt unter 105°C,
C1) 0,1 bis 25 Gewichtsprozent eines Styrol-Butadien- oder Styrol-Isopren-Blockcopolymeren,
C2) 0 bis 10 Gewichtsprozent eines Styrol-Ethylen-Butylen-Blockcopolymeren,
D) 0,1 bis 5 Gew.-% eines Nukleierungsmittels,
F) 0,01 bis 5 Gew.-% eines die Hohlräume bildenden Co-Treibmittels, jeweils bezogen auf die treibmittelhaltige Polymerschmelze, enthält.

Das vorgenannte Verfahren zur Einstellung dieser Hohlraum-Morphologie kann auch als Vornukleierung bezeichnet werden, wobei die Hohlräume im wesentlichen durch das Gas F) gebildet werden.

Das die Hohlräume bildende Gas F) unterscheidet sich vom eigentlichen Treibmittel E in dessen Löslichkeit im Polymeren. Bei der Herstellung werden zunächst Gas F) und gegebenefalls ein Treibmittel E) im Polymeren bei ausreichend hohem Druck vollständig gelöst. Anschließend wird der Druck reduziert, vorzugsweise innerhalb kurzer Zeit, und somit die Löslichkeit des Gas F) reduziert. Dadurch stellt sich eine Phasenseparation in der polymeren Matrix ein und eine vornukleierter Struktur entsteht. Das Treibmittel E) bleibt, falls eingesetzt, aufgrund dessen höherer Löslichkeit und / oder dessen geringer Diffusionsgeschwindigkeit überwiegend im Polymeren gelöst. Simultan zur Druckreduzierung wird vorzugsweise eine Temperaturreduktion durchgeführt, um eine zu starke Nukleierung des Systems zu verhindern und ein Ausdiffundieren des eigentlichen Treibmittels E) zu verringern.

Bevorzugt werden Gase F) eingesetzt, die zudem eine höhere Diffusionsgeschwindigkeit und / oder eine erhöhte Permeabilität und / oder einen erhöhten Dampfdruck als das eigentliche Treibmittel E) aufweisen; besonders bevorzugt weisen die Gas F) mehrere der Charakteristika auf. Um den Nukleierungsprozess zusätzlich zu unterstützen, können kleine Mengen üblicher Nukleierungsmittel, beispielsweise anorganische Partikel wie Talkum eingesetzt werden.

In allen Fällen sollte die zugegebene Menge des eingesetzten Gas F) bei der Vornukleierung die maximale Löslichkeit bei den vorliegenden Prozessbedingungen überschreiten. Daher werden bevorzugt Gas F) eingesetzt, die eine geringe, aber ausreichende Löslichkeit im Polymeren aufweisen. Dazu zählen insbesondere Gase wie Stickstoff, Kohlendioxid, Luft oder Edelgase, besonders bevorzugt Stickstoff, dessen Löslichkeit in vielen Polymeren sich bei niedrigen Temperaturen und Drücken verringert. Es sind aber auch andere flüssige Additive vorstellbar.

Besonders bevorzugt werden inerte Gase wie Stickstoff und Kohlendioxid eingesetzt. Beide Gase zeichnen sich neben ihren geeigneten physikalischen Eigenschaften durch geringe Kosten, gute Verfügbarkeit, einfache Handhabbarkeit und reaktionsträges bzw. inertes Verhaltes aus. Beispielsweise findet in Gegenwart der beiden Gase in nahezu allen Fällen keine Degradation des Polymeren statt. Da die Gase selbst aus der Atmosphäre gewonnen werden, besitzen sie zudem ein umweltneutrales Verhalten.

Die eingesetzte Menge des Gas F) sollte dabei: (i) hinreichend klein sein, um sich bei den gegebenen Schmelzetemperaturen und -drücken bei der Schmelzeimprägnierung bis zur Granulierung zu lösen; (ii) ausreichend hoch sein, um sich beim Granulierwasserdruck und der Granuliertemperatur aus dem Polymer zu entmischen und nukleieren. In einer bevorzugten Ausführungsform ist mindestens eines der verwendeten Treibmittel bei Raumtemperatur und unter Normaldruck gasförmig.

Bevorzugt wird zudem ein Gas F) eingesetzt, das nach dem Vornukleierung aus dem expandierbaren Granulat innerhalb kurzer Zeit vollständig entweicht. Als Gas F) werden besonders bevorzugt Stickstoff, Kohlendioxid, Argon, Helium oder Mischungen davon, eingesetzt.

Besonders bevorzugt wird Talk als Nukleierungsmittel D) in Kombination mit Stickstoff als Gas F) eingesetzt.

Desweiteren können entsprechende vornukleierte Partikel nach dem Suspensionsverfahren erhalten werden, beispielsweise durch Suspensionspolymerisation in Gegenwart von Persulfaten und Elektrolyten, wie in EP-A 0 761 729 beschrieben. Geeignete Vornukleierte Partikel können aber auch durch Trocknung von wasserhaltigen EPS-Partikeln erhalten werden.

Für den Transport und die Lagerung der expandierbaren Granulate kommen unter anderem Metallfässer und Oktabins zum Einsatz. Beim Einsatz von Fässern ist zu beachten, dass sich durch die Freisetzung der Gas F) ggf. Druck im Fass aufbauen kann. Als Packmittel sind daher vorzugsweise offene Gebinde wie Oktabins oder Fässer zu verwenden, die einen Druckabbau durch Permeation des Gases aus dem Fass ermöglichen. Besonders bevorzugt sind dabei Fässer, die ein Ausdiffundieren des Gass F) ermöglichen und eine Ausdiffundieren des eigentlichen Treibmittels E) minimieren bzw. verhindern. Dies kann beispielsweise durch die Abstimmung des Dichtungswerkstoffs auf das Treibmittel bzw. Gas F) ermöglicht werden.

Durch die Vornukleierung, beispielsweise durch Zugabe geringer Mengen an Stickstoff und Kohlendioxid, kann im expandierbaren, treibmittelhaltigen Granulat eine zelluläre Morphologie eingestellt werden. Die mittlere Zellgröße im Zentrum der Partikel ist kann dabei größer als in den Randbereichen, die Dichte ist in den Randbereichen der Partikel höher sein. Dadurch werden Treibmittelverluste soweit wie möglich minimiert.

Durch die Vornukleierung ist eine deutliche bessere Zellgrößenverteilung und einer Reduzierung der Zellgröße nach dem Vorschäumen erzielbar. Zudem ist die benötigte Menge an Treibmittel zum Erreichen einer minimalen Schüttdichte geringer und die Lagerstabilität des Materials verbessert. Geringe Mengen Stickstoff oder Kohlendioxid bei Zugabe in die Schmelze können zu einer deutlichen Verkürzung der Vorschäumzeiten bei konstantem Treibmittelgehalt bzw. zu einer deutlichen Reduzierung der Treibmittelmengen bei gleichbleibenden Schäumzeiten und minimalen Schaumdichten führen. Zudem werden durch die Vornukleierung die Produkthomogenität und die Prozessstabilität verbessert.

Eine erneute Imprägnierung der erfindungsgemäßen Polymergranulate mit Treibmitteln ist des Weiteren deutlich schneller möglich als bei Granulaten mit identischer Zusammensetzung und kompakter, d. h. nichtzellulärer Struktur. Einerseits sind die Diffusionszeiten geringer, andererseits benötigt man analog zu direkt imprägnierten Systemen geringere Treibmittelmengen für das Schäumen.

Schließlich kann durch die Vornukleierung der Treibmittelgehalt, der zur Erzielung einer gewissen Dichte erforderlich ist, reduziert und damit die Entformzeiten bei der Formteil- bzw. Blockherstellung verringert werden. Somit können die Weiterverarbeitungskosten reduziert und die Produktqualität verbessert werden.

Als Nukleierungsmittel D)eignen sich anorganische oder organische Nukleierungsmittel. Als anorganische Nukleierungsmittel eignen sich beispielsweise Talkum, Siliziumdioxid, Mika, Ton, Zeolithe oder Calziumcarbonat. Als organische Nukleierungsmittel eignen sich beispielsweise Wachse, wie die unter der Bezeichnung Luwax® vertriebenen Polyethylenwachse. Bevorzugt wird Talkum eingesetzt.

Bevorzugt werden die zur Nachimprägnierung eingesetzten thermoplastischen Polymerpartikel mit einem Verarbeitungshilfsmittel beschichtet.

Bevorzugt enthalten die zur Nachimprägnierung eingesetzten thermoplastischen Polymerpartikel die folgenden Komponenten:

### Komponente A

Die Polymerpartikel enthalten 45 bis 97,8 Gew.-%, besonders bevorzugt 55 bis 78,1 Gew.-% eines Styrolpolymeren A), wie Standard (GPPS)- oder Schlagzähpolystyrol (HIPS) oder Styrol-Acrylnitril-Copolymere (SAN) oder Acrylnitril-Butadien-Styrol-Copolymere (ABS) oder Mischungen davon. Die zur Herstellung der Schaumstoffpartikel P1 eingesetzten expandierbaren, thermoplastischen Polymerpartikel enthalten als Styrolpolymer A) bevorzugt Standard-Polystyrol (GPPS). Besonders bevorzugt werden Standard-Polystyroltypen mit gewichtsmittleren Molekulargewichten im Bereich von 120.000 bis 300.000 g/mol, insbesondere 190.000 bis 280.000 g/mol, ermittelt mit Gelpermeationschromatographie; und einer Schmelzevolumenrate MVR (200°C/5 kg) nach ISO 113 im Bereich von 1 bis 10 cm³/10 min, beispielsweise PS 158 K, 168 N oder 148 G der BASF SE. Zur Verbesserung der Verschweißung der Schaumstoffpartikel bei der Verarbeitung zum Formteil können leichtfließende Typen, beispielsweise Empera® 156L (Innovene) zugesetzt werden

### Komponenten B

Als Komponenten B) enthalten die thermoplastischen Polymerpartikel Polyolefine B1) mit einem Schmelzpunkt im Bereich von 105 bis 140°C und Polyolefine B2) mit einem Schmelzpunkt unter 105°C. Der Schmelzpunkt ist der mittels DSC (Dynamical Scanning Calorimetrie) bei einer Aufheizrate von 10°C/Minute ermittelte Schmelzpeak.

Die thermoplastischen Polymerpartikel enthalten 1 bis 45 Gewichtsprozent, bevorzugt 4 bis 35 Gew.-%, besonders bevorzugt 7 bis 15 Gewichtsprozent eines Polyolefins B1). Als Polyolefin B1) wird bevorzugt ein. Homo- oder Copolymerer von Ethylen und/oder Propylen mit einer Dichte im Bereich von 0,91 bis 0,98 g/L (bestimmt nach ASTM D792), insbesondere Polyethylen eingesetzt. Als Polypropylene kommen insbesondere Spritzgusstypen in Betracht. Als Polyethylene kommen kommerziell erhältliche Homopolymere aus Ethylen, wie PE-LD (Spritzgusstypen), -LLD, -HD, oder Copolymere aus Ethylen und Propylen (z. B Moplen® RP220 und Moplen® RP320 der Basell oder Versify®-Typen der Dow), Ethylen und Vinylacetat (EVA), E-thylenacrylate (EA) oder Ethylen-Butylen-Acrylate (EBA) in Frage. Der Schmelzevolumenindex MVI (190°C/2,16 kg) der Polyethylene liegt üblicherweise im Bereich von 0,5 bis 40 g/10 min, die Dichte im Bereich von 0,91 bis 0,95 g/cm³. Außerdem können Abmischungen mit Polyisobuten (PIB)(z. B. Oppanol® B150 der BASF Aktengesellschaft) eingesetzt werden. Besonders bevorzugt wird LLDPE mit einem Schmelzpunkt im Bereich von 110 bis 125°C und einer Dichte im Bereich von 0,92 bis 0,94 g/L eingesetzt.

Als Komponente B1) eigen sich auch Olefinblockcopolymere, welche sich aus einem Polyolefinblock PB1 (Hartblock) und einem Polyolefinblock PB2 (Weichblock) zusammensetzen, wie sie beispielsweise in WO 2006/099631 beschrieben sind. Der Polyolefinblock PB1 besteht bevorzugt aus 95 bis 100 Gew.-% Ethylen. Der PB2-Block besteht bevorzugt aus Ethylen und α-Olefin, wobei als α-Olefine Styrol, Propylen, 1-Buten, 1-Hexen, 1-Octen, 4-Methyl-1-Penten, Norbornene, 1-Decen, 1,5-Hexadien oder Mischungen davon in Betracht kommen. Bevorzugt wird als PB2-Block ein Ethylen-α-Olefin-Copolymerblock mit 5 bis 60 Gew.-% -α-Olefin, insbesonder ein Ethylen-Octen-Copolymerblock. Bevorzugt sind Multiblockcopolymere der Formel (PB1-PB2)n, wobei n für eine ganze Zahl zwischen 1 bis 100 steht. Die Blöcke PB1 und PB2 bilden im wesentlich eine lineare Kette und sind bevorzugt alternierend oder statistisch verteilt. Der Anteil der PB2-Blöcke beträgt bevorzugt 40 bis 60 Gew.-%, bezogen auf des Olefinblockcopolymer. Besonders bevorzugt sind Olefinblockcopolymer mit alternierenden, harten PB1-Blöcken und weichen, elastomeren PB2-Blöcken, die im Handel unter der Bezeichnung INFU-SE® erhältlich sind.

Mit geringerem Anteil an Polyolefin B1) nimmt das Treibmittelhaltevermögen deutlich zu. Damit werden die Lagerfähigkeit und die Verarbeitbarkeit der expandierbaren, thermoplastischen Polymerpartikel deutlich verbessert. Im Bereich von 4 bis 20 Gew.-% Polyolefin erhält man expandierbare thermoplastische Polymerpartikel mit langer Lagerfähigkeit, ohne dass sich die elastischen Eigenschaften des daraus hergestellten Partikelschaumstoffs verschlechtern. Dies zeigt sich beispielsweise in einem geringern Entformungsrest εᵣₑₛₜ im Bereich von 25 bis 35 %.

Als Polyolefin B2) enthalten die expandierbaren, thermoplastischen Polymerpartikel enthalten 0 bis 25 Gewichtsprozent, bevorzugt 1 bis 15 Gew.-%, besonders bevorzugt 5 bis 10 Gewichtsprozent eines Polyolefins B2) mit einem Schmelzpunkt unter 105°C. Das Polyolefin B2) weist vorzugsweise eine Dichte im Bereich von 0,86 bis 0,90 g/L (bestimmt nach ASTM D792) auf. Hierfür eignen sich insbesondere thermoplastische Elastomere auf Basis von Olefinen (TPO). Besonders bevorzugt werden Ethylen-Octen-Copolymere, die beispielsweise im Handel unter der Bezeichnung Engage® 8411 von der Firma Dow erhältlich sind. Expandierbare, thermoplastische Polymerpartikel, die die Komponente B2) enthalten, zeigen nach der Verarbeitung zu Schaumstoffformteilen eine deutliche Verbesserung in der Biegearbeit und Reißfestigkeit.

### Komponenten C

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische und bikontinuierliche Morphologien, die eine starke Verwandtschaft mit lyotropen Phasen aufweisen.

Zur gezielten Einstellung der gewünschten Morphologie werden Verträglichkeitsvermittler (Komponenten C) eingesetzt. Eine Verbesserung der Verträglichkeit wird erfindungsgemäß durch die Verwendung einer Mischung von Styrol-Butadien- oder Styrol-Isopren-Blockcopolymeren als Komponente C1) und Styrol-Etylen-Butylen-Blockcopolymeren (SEBS) als Komponente C2) erreicht.

Die Verträglichkeitsvermittler führen zu einer verbesserten Haftung zwischen Polyolefinreichen und Styrolpolymerreichen Phasen und verbessern schon in geringen Mengen die Elastizität des Schaumstoffs deutlich gegenüber herkömmlichen EPS-Schaumstoffen. Untersuchungen zur Domänengröße der Polyolefinreichen Phase zeigten, dass der Verträglichkeitsvermittler durch Reduktion der Grenzflächenspannung kleine Tröpfchen stabilisiert.

Besonders bevorzugt bestehen die expandierbaren, thermoplastischen Polymerpartikel aus einer mehrphasigen treibmittelhaltigen Polymermischung mit mindestens einer kontinuierlichen Phase und mindestens zwei in der kontinuierlichen Phase verteilten dispersen Phasen P1 und P2 , wobei
a) die kontinuierliche Phase im wesentlichen aus der Komponenten A,
b) die erste disperse Phase P1 im wesentlichen aus den Komponenten B1 und B2 und
c) die zweite disperse Phase P2 im wesentlichen aus der Komponente C1 bestehen.

Die Komponenten C2) bildet bevorzugt eine Phasengrenzfläche zwischen der dispersen Phase P1 und der kontinuierlichen Phase.

Durch diese zusätzliche disperse Phase ist es möglich, bei einem höheren Weichphasenanteil die Domänengröße der dispersen Phase < 2 µm zu halten. Dies führt bei gleicher Expandierbarkeit zu einer höheren Biegearbeit im Parikelschaumstoff.

Bevorzugt liegt in den expandierbaren, thermoplastischen Polymerpartikeln die Summe der Komponenten C1) und C2) im Bereich von 3,5 bis 30 Gewichtsprozent, besonders bevorzugt im Bereich von 6,8 bis 18 Gewichtsprozent.

Bevorzugt liegt das Gewichtsverhältnis der Summe aus den Komponenten B1) und B2) zur Komponenten C2) in den expandierbaren, thermoplastischen Polymerpartikeln bevorzugt im Bereich von 5 bis 70.

Das Gewichtsverhältnis der Komponenten C1) zu C2) liegt in den expandierbaren, thermoplastischen Polymerpartikeln bevorzugt im Bereich von 2 bis 5.

Die expandierbaren, thermoplastischen Polymerpartikel enthalten als Komponente C1) 0,1 bis 25 Gewichtsprozent, bevorzugz 1 bis 15 Gewichtsprozent, insbesondere 6 bis 9,9 Gewichtsprozent eines Styrol-Butadien- oder Styrol-Isopren-Blockcopolymeren.

Hierfür eignen sich beispielsweise Styrol-Butadien- oder Styrol-Isopren-Blockcopolymere. Der Gesamtdiengehalt liegt bevorzugt im Bereich von 20 bis 60 Gew.-%, besonders bevorzugt im Bereich von 30 bis 50 Gew.-%, der Gesamtstyrolgehalt liegt entsprechend bevorzugt im Bereich von 40 bis 80 Gew.-%, besonders bevorzugt im Bereich von 50 bis 70 Gew.-%.

Als Verträglichkeitsvermittler werden bevorzugt Styrol-Butadien-Styrol (SBS) Dreiblockcopolymere mit einem Butadiengehalt von 20 bis 60 Gew.-%, bevorzugt 30 bis 50 Gew.-%, welche teilweise hydriert oder nicht hydriert sein können, verwendet Diese sind beispielsweise unter der Bezeichnung Styroflex® 2G66, Styrolux® 3G55, Styroclear® GH62, Kraton® D 1101, Kraton® D 1155, Tuftec® H1043 oder Europren® SOL T6414 im Handel. Dabei handelt es sich um SBS-Blockcopolymerer mit scharfen Übergängen zwischen B- und S-Blöcken.

Als Komponente C2) enthalten die expandierbaren, thermoplastischen Polymerpartikel 0 bis 10 Gewichtsprozent, bevorzugt 1 bis 9,9 Gew.-%, insbesondere 0,8 bis 5 Gewichtsprozent eines Styrol-Etylen-Butylen-Blockcopolymeren (SEBS). Geeignete Styrol-Etylen-Butylen-Blockcopolymere (SEBS) sind beispielsweise solche, die durch Hydrierung der olefinischen Doppelbindungen der Blockcopolymeren C1) erhältlich sind. Geeignete Styrol-Ethylen-Butylen-Blockcopolymere sind beispielsweise die im Handel erhältlichen Kraton® G Typen, insbesondere Kraton® G 1650.

### Komponente D

Als Treibmittel (Komponente D) enthalten die expandierbaren, thermoplastischen Polymerpartikel in der Regel 1 bis 15 Gewichtsprozent, bevorzugt 3 bis 10 Gewichtsprozent, bezogen auf die Summe aller Komponenten A) bis E), eines physikalischen Treibmittels. Die Treibmittel können bei Raumtemperatur (20 bis 30°C) und Normaldruck gasförmig oder flüssig sein. Sie sollten einen Siedepunkt unterhalb der Erweichungstemperatur der Polymermischung, üblicherweise im Bereich von -40 bis 80°C, bevorzugt im Bereich von -10 bis 40°C.

Geeignete Treibmittel sind beispielsweise halogenierte oder halogenfreie, wie aliphatischen C₃ bis C₈-Kohlenwasserstoffen, Alkoholen, Ketonen oder Ethern. Als aliphatische Treibmittel eignen sich beispielsweise aliphatische C₃ bis C₈-Kohlenwasserstoffe, wie n-Propan, n-Butan, iso-Butan, n-Pentan, iso-Pentan, n-Hexan, Neopentan, cycloaliphatische Kohlenwasserstoffe, wie Cyclobutan und Ccylopentan, halogenierte Kohlenwaserstoffe, wie Methylchlorid, Ethylchlorid, Methylenchlorid, Trichlorofluormethan, Dichlorfluormethan, Dichlordifluormethan, Chlordiflourmethan, Dichlortetrafluorethan und Mischungen davon. Bevorzugt werden die halogenfreien Treibmittel iso-Butan, n-Butan, iso-Pentan, n-Pentan, Neopentan, Cyclopentan und Mischungen davon.

Als Treibmittel werden bevorzugt aliphatische C₃ - C₇-Kohlenwasserstoffe, insbesondere n-Pentan und iso-Pentan oder Mischungen davon eingesetzt werden.

Das Treibmittelhaltevermögen nach Lagerung kann verbessert und geringere minimale Schüttdichten erreicht werden, wenn das Treibmittel bevorzugt einen Anteil von 25 bis 100 Gewichtsprozent, besonders bevorzugt 35 bis 95 Gewichtsprozent, bezogen auf das Treibmittel, iso-Pentan oder Cyclopentan enthält. Besonders bevorzugt werden Mischungen aus 30 bis 98 Gew.-%, insbesondere 35 bis 95 Gew.-% Iso-Pentan und 70 bis 2 Gew.-%, insbesondere 65 bis 5 Gew.-% n-Pentan eingesetzt.

Überraschenderweise wurde trotz des niedrigeren Siedepunkts von iso-Pentan (28°C) und des höheren Dampfdrucks (751 hPa) im Vergleich zu reinem n-Pentan (36°C; 562 hPa) in Treibmittelmischungen mit einem iso-Pentan-Gehalt von mindestens 30 Gew.-% ein deutlich besseres Treibmittelhaltevermögen und damit erhöhte Lagerstabilität kombiniert mit einer besseren Schäumbarkeit zu niedrigen Dichten gefunden.

### Komponente E

Als Komponente E enthalten die expandierbaren, thermoplastischen Polymerpartikel 0 bis 5 Gewichtsprozent, bevorzugt 0,3 bis 3 Gewichtsprozent eines Keimbildner oder Nukleierungsmittel, beispielsweise Talkum.

Des Weiteren können der mehrphasigen Polymermischung Additive, Weichmacher, halogenhaltige oder halogenfreie Flammschutzmittel, lösliche und unlösliche anorganische und/oder organische Farbstoffe und Pigmente oder Füllstoffe in Mengen zugesetzt werden, die die Domänenbildung und daraus resultierende Schaumstoffstruktur nicht beeinträchtigen.

Die Polymermischung mit einer kontinuierlichen und mindestens einer dispersen Phase kann durch Mischen von zwei unverträglichen thermoplastischen Polymeren, beispielsweise in einem Extruder, hergestellt werden.

Die erfindungsgemäßen expandierbaren thermoplastischen Polymerpartikel können durch ein Verfahren erhalten werden, bei dem man
a) eine Polymermischungen mit einer kontinuierlichen und mindestens einer dispersen Phase durch Mischen der Komponenten A) bis C) und gegebenenfalls E) herstellt,b) diese Mischungen mit einem Treibmittel D) imprägniert und zu expandierbaren thermoplastischen Polymerpartikel granuliert,
c) und zu expandierbaren, thermoplastischen Polymerpartikel durch Unterwassergranulierung bei einem Druck im Bereich von 1,5 bis 10 bar granuliert.

Der mittlere Durchmesser der dispersen Phase der in Stufe a) hergestellten Polymermischung liegt bevorzugt im Bereich von 1 bis 2000 nm, besonders bevorzugt im Bereich von 100 bis 1500 nm.

Zur Verbesserung der Verarbeitbarkeit können die fertigen expandierbaren thermoplastischen Polymerpartikel durch Glycerinester, Antistatika oder Antiverklebungsmittel beschichtet werden. Bevorzugt werden die erhaltenen expandierbaren auf einen Durchmesser im Bereich von 0,2 bis 10 mm aufgeschäumt. Ihre Schüttdichte liegt vorzugsweise im Bereich von 10 bis 100 g/l.

Die Verschweißung der vorgeschäumten Schaumstoffperlen zum Formteil und die daraus resultierenden mechanischen Eigenschaften werden insbesondere durch Beschichtung der expandierbaren thermoplastischen Polymerpartikel mit einem Glycerinstearat verbessert. Besonders bevorzugt wird eine Beschichtung aus 50 bis 100 Gew.-% Glycerintristearat (GTS), 0 bis 50 Gew.-% Glycerinmonostearat (GMS) und 0 bis 20 Gew.-% Kieselsäure verwendet.

Die expandierbaren, thermoplastischen Polymerpartikel können mittels Heißluft oder Wasserdampf zu Schaumpartikeln mit einer Dichte im Bereich von 8 bis 200 kg/m³, bevorzugt im Bereich von 10 bis 80 kg/m³, insbesondere im Bereich von 10 bis 50 kg/m³ vorgeschäumt und anschließend in einer geschlossenen Form zu Schaumstoffformkörpern verschweißt werden. Hierbei wird der Verarbeitungsdruck so niedrig gewählt wird, dass Domänenstruktur in den Zellmembranen erhalten bleibt, zu Partikelschaumstoffformteilen verschweißt. Üblicherweise wird ein Überdruck im Bereich von 0,5 bis 1,5 bar, insbesondere 0,7 bis 1,0 bar.

Überraschenderweise wurde nun gefunden, dass die Treibmittelbeladung in einem von der Herstellung der Minigranulate abgetrennten Schritt in der Gasphase oder flüssigen Treibmittelphase sehr gut funktioniert, wohin gegen die Imprägnierung unter Suspensionsbedingungen in einer wässrigen Phase nicht zufriedenstellend verläuft und nur schwer zu beherrschen ist.

Durch die erfindungsgemäßen Polyolefin/Styrolpolymer-Mischungen ist es nun gelungen ein Polymersystem bereitzustellen, dass sich sehr gut in kurzer Zeit in der Gasphase oder flüssigen Treibmittelphase imprägnieren lässt ohne dass die Polymergranulate miteinander verkleben und somit rieselfähig bleiben. Dabei kann auf die Verwendung von wässrigen Suspensionen oder anorganischen Beschichtungsmitteln verzichtet werden.

Im Gegensatz zu expandierbaren Partikeln, die ausschließlich aus Polyolefinen als Polymerkomponente bestehen, besitzen die erfindungsgemäßen imprägnierten Polymergranulate erstaunlicherweise ein gutes Treibmittelhaltevermögen und können bis zur Verarbeitung in Behältnissen wie z.B. Metallfässer über Monate zwischengelagert werden. Somit vereinen zum ersten Mal die gefundenen Polyolefin/Styrolpolymer-Mischungen die positiven Eigenschafen von Styrol- und Polyolefinpolymerisaten in einem System.

Bei der Imprägnierung fallen keine Abwässer oder aufwendige Aufarbeitungsschritte an. Es ist sogar möglich die Polymergranulate direkt in den Metallfässern mit dem Treibmittel zu beladen. Dazu wird zu den Fässern die benötigte Treibmittelmenge flüssig dosiert und die Metallfässer anschließend gasdicht verschlossen. Nach einer Reifung von mehreren Tagen hat sich das Treibmittel gleichmäßig über das Granulat verteilt und kann gleichmäßig geschäumt werden. Zur Verbesserung der Verarbeitbarkeit können die fertigen expandierbaren thermoplastischen Polymerpartikel durch Glycerinester, Antistatika oder Antiverklebungsmittel beschichtet werden. Üblich Beschichtungsmittel können vor oder nach der Imprägnierung aufgebracht werden um die spätere Verschweißung zu optimieren, werden aber für die Beladung mit dem Treibmittel nicht benötigt.

Bevorzugt werden die erhaltenen runden oder ovalen Partikel auf einen Durchmesser im Bereich von 0,2 bis 10 mm aufgeschäumt. Ihre Schüttdichte liegt vorzugsweise im Bereich von 10 bis 100 g/l.

Die Verschweißung der vorgeschäumten Schaumstoffperlen zum Formteil und die daraus resultierenden mechanischen Eigenschaften werden insbesondere durch Beschichtung der expandierbaren thermoplastischen Polymerpartikel mit einem Glycerinstearat verbessert. Besonders bevorzugt wird eine Beschichtung aus 50 bis 100 Gew.-% Glycerintristearat (GTS), 0 bis 50 Gew.-% Glycerinmonostearat (GMS) und 0 bis 20 Gew.-% Kieselsäure verwendet.

Die expandierbaren, thermoplastischen Polymerpartikel können mittels Heißluft oder Wasserdampf zu Schaumpartikeln mit einer Dichte im Bereich von 8 bis 200 kg/m³, bevorzugt im Bereich von 10 bis 80 kg/m³, insbesondere im Bereich von 10 bis 50 kg/m³ vorgeschäumt und anschließend in einer geschlossenen Form zu Schaumstoffformkörpern verschweißt werden. Üblicherweise wird ein Überdruck im Bereich von 0,5 bis 1,5 bar, insbesondere 0,7 bis 1,0 bar angewendet.

Polymergranulate aus mehrphasigen Polyolefin/Styrolpolymer-mischugen, lassen sich außerordentlich gut in der Gasphase mit Treibmittel, bevorzugt Pentan imprägnieren. Die Polymerschmelze wir dabei nicht in einem Extruder mit Pentan beladen, sondern die Beladung mit dem Treibmittel erfolgt nach dem Extrusionsschritt in einem nachgelagerten Imprägnierschritt in der Gas- / Flüssigphase. Durch die Trennung der beiden Verfahrensschritte ist es möglich ein unbegrenzt lagerfähiges Polymergranulat herzustellen, dass erst kurz vor Gebrauch mit dem Treibmittel beladen wird, um es anschließend aufzuschäumen.

Da Pentan mit Luftsauerstoff explosive Gemische bilden kann, wird durch die Trennung der beiden Verfahrensschritte der Sicherheitstechnische Aufwand reduziert. Des Weiteren werden durch die vor Ort Imprägnierung Pentanemissionen deutlich reduziert und für die Herstellung der Minigranulate können handelsübliche Extruder verwendet werden. In dem ersten Herstellschritt werden die Polymerkomponenten ohne das eigentliche Treibmittel Pentan in einem Extruder miteinander gemischt und granuliert.

Zur Verbesserung der späteren Zellstruktur werden in diesem Schritt Nukleierungsmittel wie Talkum oder nicht brennbare Gase wie Stickstoff oder Kohlendioxid zugesetzt. Die Zugabe von geringen Mengen an Stickstoff führt bei der Granulierung zu ersten Gasbläschen im Granulat und begünstigt später ein gleichmäßiges Aufschäumen mit homogener Zellstruktur.

Das treibmittelfreie Granulat wird dann anschließend imprägniert in der Gas- / Flüssigphase imprägniert. Versuche die Minigranulate in der Suspension mit Wasser als Trennmittel zu imprägnieren, hat nicht funktioniert und entweder zu Linsenförmigen Minigranulaten oder inhomogenen Zellstrukturen geführt. Die mechanischen Kenndaten der über Suspensionsimprägnierung hergestellten Granulate und zu Schaumteilen verarbeiteten Muster war dabei schlecht.

### Beispiele

### Einsatzstoffe:

### Komponente A:

Polystyrol mit einem Schmelzeviskositätsindex MVI (200°C/5kg) von 2,9 cm³/10 min (PS 158K der BASF SE, M_{w} = 280.000 g/mol, Viskositätszahl VN 98 ml/g)

### Komponente B:

B1: Polyethylen PE-LLD (LL1201 XV, Exxon Mobile, Dichte 0,925 g/L, MVI = 0,7 g/10 min, Schmelzpunkt 123°C)
B2: Polyethylen Ethylen-Octen-Copolymer (Engage® 8402 der Dow, Dichte 0,880 g/L, MVI = 18 g/10 min, Schmelzpunkt 72°C)

### Komponente C:

C1: Styrolux® 3G55, Styrol-Butadien-Blockcopolymer der BASF SE,
C2: Kraton G 1650, Styrol-Ethylen-Butylen-Blockcopolymer der Kraton Polymers LLC

### Komponente D:

D Treibmittelmischung aus 95 Ge.-% iso-Pentan und 5 Gew.-% n-Pentan

### Komponente E: Talkum

### Komponente F: Stickstoff N₂

### Herstellung der Rohstoffgranulate E1, E2, und E3

Die Rohstoffgranulate wurden durch Extrusion der in Tabelle 1 aufgeführten Komponenten und anschließender Unterwassergranulierung erhalten. Die durchschnittliche Partikelgröße betrug 1,25 mm.

Herstellung der Rohstoffgranulate E1 mit Pentan und anschließender Entgasung

Die Herstellung der Rohstoffgranulate E1 erfolgte nach einem Schmelzeimprägnierverfahren unter Verwendung eines Zweischneckenextruder der Firma Leitritz ZE 40 mit statischen Mischapparaten. Dazu wurden zunächst die Polymerbestandteile gemäß Tabelle 1 in dem Extruder plastifiziert und mittels einer Schmelzepumpe in eine Serie von statischen Mischern und Wärmetauschern gefördert, homogenisiert und extrudiert. Am Eingang des ersten statischen Mischers wurde technisches iso-Pentan (95 % iso-Pentan / 5 % n-Pentan) zudosiert. Anschließend wurde die Schmelzetemperatur über einen Wärmetauscher reduziert und die Schmelzetemperatur über einen weiteren statischen Mischer homogenisiert. Durch eine weitere Schmelzepumpe wurde Druck aufgebracht, um das Material über eine Lochplatte (49 Löcher ä 0.60 mm) mit einer drucküberlagerten Unterwassergranulierung zu granulieren (Wassertemperatur 50 °C). Die mittlere Partikelgröße betrug ca. 1.25 mm. Der Gesamtdurchsatz betrug 70 kg/h. Die Schmelzetemperatur am Düsenaustritt lag bei ca. 203 °C.

Das abgekühlte Granulat (Pentangehalt 5,8 Gew.-%) wurde anschließend in einem Trockenschrank bei 45°C ausgelegt und über mehrere Tage entgast, bis der iso-Pentan-Gehalt kleiner 0,5 Gew.-% war. Die so erhaltenen Granulate wurden anschließend für die Nachimprägnierung weiterverwendet.

### Herstellung der Rohstoffgranulate E2 ohne Treibmittel und ohne Stickstoff

Die Herstellung der Rohstoffgranulate E2 erfolgte in einem Zweischneckenextruder der Firma Leitritz ZE 40 unter Verwendung statischer Mischapparate. Dazu wurden zunächst die Polymerbestandteile gemäß Tabelle 1 in dem Extruder plastifiziert und über eine Schmelzepumpe in eine Serie von statischen Mischern und Wärmetauschern dosiert. Die entsprechenden Rezepturen sind der Tabelle zu entnehmen. Anschließend wurde die Schmelzetemperatur über einen Wärmetauscher reduziert und die Schmelzetemperatur über einen weiteren statischen Mischer homogenisiert. Durch eine weitere Schmelzepumpe wurde Druck aufgebracht, um das Material über eine Lochplatte (49 Löcher ä 0.60 mm) mit einer drucküberlagerten Unterwassergranulierung zu granulieren (Wassertemperatur 50 °C). Die mittlere Partikelgröße betrug ca. 1.25 mm. Der Gesamtdurchsatz betrug 70 kg/h. Die Schmelzetemperatur am Düsenaustritt lag bei ca. 201 °C.

### Herstellung der Rohstoffgranulate E3 ohne Treibmittel aber mit Stickstoff zur Vornukleierung

Die Herstellung der Rohstoffgranulate E3 erfolgte in einem Zweischneckenextruder der Firma Leitritz ZE 40 unter Verwendung statischer Mischapparate. Dazu wurden zunächst die Polymerbestandteile gemäß Tabelle 1 in dem Extruder plastifiziert und über eine Schmelzepumpe in eine Serie von statischen Mischern und Wärmetauschern dosiert. Am Eingang des ersten statischen Mischers wurde der Polymerschmelze 0,2 Gew.-% Stickstoff Hohlräume bildendes Gas zugegeben und in der Schmelze homogenisiert. Anschließend wurde die Schmelzetemperatur über einen Wärmetauscher reduziert und die Schmelzetemperatur über einen weiteren statischen Mischer homogenisiert. Durch eine weitere Schmelzepumpe wurde Druck aufgebracht, um das Material über eine Lochplatte (49 Löcher ä 0.60 mm) mit einer drucküberlagerten Unterwassergranulierung zu granulieren (Wassertemperatur 50 °C). Die mittlere Partikelgröße betrug ca. 1.25 mm. Der Gesamtdurchsatz betrug 70 kg/h. Die Schmelzetemperatur am Düsenaustritt lag bei ca. 205 °C.

**Tabelle 1: Zusammensetzung (Gewichtsteile) der Rohstoffgranulate E1, E2 und E3**

| Komponente | E1 | E2 | E3 |
|---|---|---|---|
| A | 70,1 | 70,1 | 70,1 |
| B1 | 11,7 | 11,7 | 11,7 |
| B2 | 3,9 | 3,9 | 3,9 |
| C1 | 7,8 | 7,8 | 7,8 |
| C2 | 1,0 | 1,0 | 1,0 |
| F (Stickstoff) | - | - | 0,20 |
| E (Talkum) | 0,5 | 0,5 | - |
| D (Treibmittel) | <0,5 | - | - |
| Schüttdichte [g/l] | 590 | 600 | 520 |

### Beispiele 1 - 6, 8, 9

### Gasphasen-Imprägnierung der Rohstoffgranulate E1, E2, E3

Ein mit 160 g Flüssigpentan gefüllte Verdampfer wurde im Wasserbad bei geschlossenem Ventil auf 40 °C temperiert. Im Verdampfer stellte sich der zur Temperatur gehörige Dampfdruck ein. Ein über eine temperierte Pentanleitung verbundene Imprägnierkessel wurde mit 1000 g Rohstoffgranulat befüllt und auf unter 0,1 bar evakuiert. Der Imprägnierkessel wurde auf 45°C, das Heizband der Pentanleitung auf 50°C über der Wasserbadtemperatur erwärmt. Nach Erreichen konstanter Temperatur-Werte wurde das Ventil geöffnet. Das Pentan strömte gasförmig in den Kessel und wurde vom Granulat aufgenommen. Nach einer festgelegten Zeit wurde das Ventil geschlossen. Das in der Atmosphäre des Kessels vorhandene gasförmige Pentan wurde bis zum thermodynamischen Gleichgewicht vom Polymer aufgenommen. Das Granulat wurde im Anschluss entnommen. Der Pentangehalt im Granulat ist von der Begasungszeit und der Versuchstemperatur abhängig.

### Beispiel 7

Ein Verdampfer (Volumen 3205,16 ml) wurde auf 15°C abgekühlt, evakuiert und mit 160,61g Pentan befüllt. Das Wasserbad wurde auf eine Versuchstemperatur von 39,9°C gebracht. Der Imprägnierkessel (Volumen 6,4l, Karl Kurt Juchheim, 1990) wurde mit 1000,11g entgastem Rohstoffgranulat E1 (Pentangehalt 0,11 % Pentan) befüllt, der Ankerrührer im Kessel wurde eingeschaltet (26 U/min). Der Kessel und die Pentanleitung werden auf 0,02 bar evakuiert. Die Temperatur des Kessels betrug 38,1°C, die des Heizbandes 50,0°C. Der Druck im Verdampfer stellt sich konstant auf 1,500 bar ein. Das Ventil wurde geöffnet. Der Druck fiel dabei auf 1,075 bar ab und stieg anschließend wieder an. Die Temperatur im Kessel fiel auf 36,9°C, stieg danach auf 38°C an. Beim Schließen des Ventils nach 60 min betrug der Druck im System 1,330 bar. Der Druck im Kessel fällt innerhalb von 20 Stunden auf 1,226 bar, die Temperatur am Kessel betrug 38,0°C. Der Kessel wurde auf 0,1 bar evakuiert und belüftet. Das Granulat wurde entnommen und im Schäumkasten (Firma Rauscher, Typ...) aufgeschäumt. Nach 50 sec wurde eine Schäumdichte von 18 g/l erreicht. Die im Heizofen (120°C, 180min) ermittelten flüchtigen Anteile ergaben einen Pentangehalt von 9,01%.

### Beispiel 10

Eine Dosiereinheit (Volumen 200 mlwurde mit 95,1 g Pentan befüllt. Der Imprägnierkessel (Volumen 6,4l, Karl Kurt Juchheim, 1990) wurde mit 1000,08g vornukleiertem nicht pentanhaltigem Rohstoffgranulat E3 befüllt, der Ankerrührer im Kessel wurde eingeschaltet (26 U/min). Der Kessel wurde auf 0,02 bar evakuiert. Die Temperatur des Kessels betrug 44,5°C. Im Dosiergefäß wurde mittels Stickstoff ein Druck von 5 bar erzeugt. Das Ventil wurde geöffnet. Der Druck im Kessel steigt auf 1,732 bar an. Nachdem das Pentan in der Dosiereinheit vollständig aufgebraucht ist, wurde das Ventil geschlossen. Der Druck im Kessel fällt innerhalb von 20 Stunden auf 1,096 bar, die Temperatur am Kessel betrug 45,0°C. Der Kessel wurde auf 0,1 bar evakuiert und belüftet. Das Granulat wurde entnommen und im Schäumkasten (Firma Rauscher, Typ...) aufgeschäumt. Nach 120 sec wurde eine Schäumdichte von 20,8 g/l erreicht. Die im Heizofen (120°C, 180min) ermittelten flüchtigen Anteile ergeben einen Pentangehalt von 6,57%.

### Beispiel 11

Ein Verdampfer (Volumen 3205,16 ml) wurde auf 15°C abgekühlt, evakuiert und mit 161,01 g Pentan befüllt. Das Wasserbad wurde auf eine Versuchstemperatur von 40,1°C gebracht. Der Imprägnierkessel (Volumen 6,4l, Karl Kurt Juchheim, 1990) wurde mit 1000,08g vornukleiertem nicht pentanhaltigem Rohstoffgranulat E3 befüllt, der Ankerrührer im Kessel wurde eingeschaltet (26 U/min). Der Kessel und die Pentanleitung wurden auf 0,02 bar evakuiert. Die Temperatur des Kessels betrug 45,0°C, die des Heizbandes 50,3°C. Der Druck im Verdampfer stellte sich konstant auf 1,535 bar ein. Das Ventil wurde geöffnet. Der Druck fiel dabei auf 1,165 bar ab und stieg anschließend wieder an. Die Temperatur im Kessel fiel auf 43,2°C, stieg danach auf 44,9°C an. Beim Schließen des Ventils nach 60 min betrug der Druck im System 1,503 bar. Der Druck im Kessel fiel innerhalb von 20 Stunden auf 0,936 bar, die Temperatur am Kessel betrug 45,0°C. Der Kessel wurde auf 0,1 bar evakuiert und belüftet. Das Granulat wurde entnommen und im Schäumkasten (Firma Rauscher) aufgeschäumt. Nach 420 sec wurde eine Schäumdichte von 21 g/l erreicht. Die im Heizofen (120°C, 180min) ermittelten flüchtigen Anteile ergaben einen Pentangehalt von 5,14%.

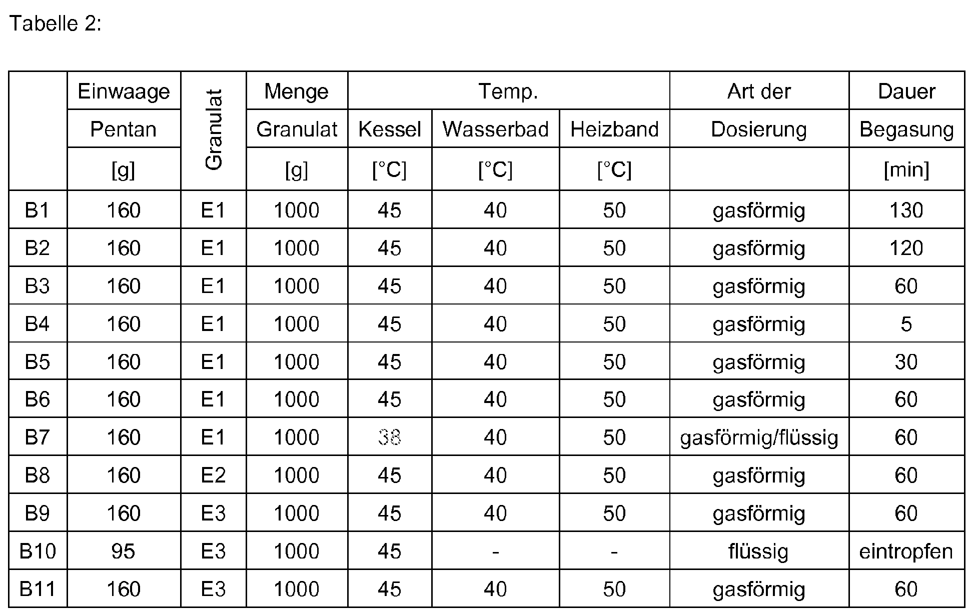

### Vergleichsversuche V1 - V3 (Imprägnierung im Rührkessel in Suspension)

Als Vergleichsversuche wurden jeweils 916 g Rohstoffgranulat E1 im Rührkessel nachimprägniert. Zur Imprägnierung im Rührkessel (Juvo) wurden neben 3500 g Wasser und dem 66 gTreibmittel iso-Pentan eine Fällung bestehend aus 1000g MPP (Magensiumpyrophosphat) eingesetzt. Die Fällung setzt sich bei der Imprägnierung auf die Oberfläche des Polymers und sorgt für eine Verringerung der elektrostatischen Aufladbarkeit und vermeidet die Verklumpung des Polymers, während der Imprägnierung. Durch die Herabsetzung der Oberflächenspannung des Wassers mittels des Tensids K30 wird die Ausbildung einer stabilen Suspension ermöglicht.

Zunächst wurden Wasser, Fällung, Polymer und Tensid in den Kessel dosiert und der Kessel dicht verschlossen. Der Rührer wurde eingeschaltet (Rührerdrehzahl 1/min) und die Solltemperatur des Öls am Regler eingestellt. Die sich dadurch einstellende Innentemperatur im Kessel lag um etwa 20 °C niedriger als die Öltemperatur. Anschließend wurde die gewünschte Menge Treibmittel in den Vorratsbehälter gegossen. Nach Erreichen der gewünschten Innentemperatur im Kessel (etwa 2 Stunden), wurde mit der Zudosierung des Treibmittels begonnen. Das Treibmittel wurde mit Hilfe von Stickstoff innerhalb einer Stunde tröpfchenweise in den Kessel eingedrückt. Dadurch steigt der Druck im Kessel von etwa 2 bar auf etwa 9 bar an. Die Dosierung darf nicht zu schnell erfolgen (Dossierzeit), damit die Perlen genug Zeit haben das Treibmittel aufzunehmen. Andernfalls würde die hohe Treibmittelmenge an der Oberfläche der Perle den Kunststoff so stark erweichen, dass die Perlen verklumpen. Nachdem die Dosierung abgeschlossen war, baute sich bei konstanter Innentemperatur der Druck langsam ab. Während dieses Abbaus nahm das Kunststoffgranulat das Treibmittel fast vollständig auf. Erst nachdem der Druck konstant war, war die Pentanaufnahme abgeschlossen (Imprägnierzeit) und es wurde mit der Kühlung des Kessels begonnen (Kühlzeit). Ab einer Innentemperatur von 40 °C wurde der Rührer abgestellt. Die Summe aus Dossierzeit, Imprägnierzeit, Kühlzeit ergibt dann die eigentliche Standzeit der Suspensionsimprägnierung. Nach Abkühlen auf die Raumtemperatur wurde das Produkt aus dem Kessel entnommen und die Fällung mit Wasser ausgewaschen und unter denselben Bedingungen wie bei der Gasphasenimprägnierung weiterverarbeitet (siehe Verarbeitung).

**Tabelle 3: Versuchsparameter für die Vergleichsversuche**

| | V1 | V2 | V3 |
|---|---|---|---|
| Temperatur Kessel [°C] | 130 | 115 | 110 |
| Dosierzeit Pentan [h] | 1,25 | 0,83 | 1,16 |
| Imprägnierzeit [h] | 0,58 | 0,85 | 0,46 |
| Kühlzeit [h] | 1,58 | 4,16 | 4,30 |
| Standzeit [h] | 3,41 | 5,84 | 5,92 |
| Pentangehalt [%] | 6,2 | 5,7 | 6,0 |
| Minimale Schüttdichte [g/l] | 31,5 | 37,3 | 58 |
| Zellzahl | 3,2 | 3,1 | 3,2 |
| Schaumperle | linsenförmig | | |
| Zellstruktur | | Inhomogen | Inhomogen |
| | | | |

Aus Vergleichsversuch V1 ließen sich aufgrund der linsenförmigen Schaumstoffpartikel nicht zu Schaumstoffformteilen verarbeiten. Bei den Vergleichsversuchen V2 und V3 konnte die Abweichung von einer runden Partikelform durch Herabsetzung der Imprägniertemperatur verringert werden. Dies hatte jedoch zur Folge, dass das Treibmittel von den Rohstoffgranulaten nur inhomogen aufgenommen wurde und sich die Schäumbarkeit und die Zellstruktur daher deutlich verschlechterten.

### Verarbeitung der pentanhaltigen Granulate und Bestimmung der Schüttdichte / Zellzahl

Zur Verbesserung der Verarbeitungseigenschaften wurde das pentanhaltige Granulat mit den Beschichtungskomponenten Glycerintristearat (GTS) und 70 Gew.-% GTS, 30 Gew.-% Glycerinmonostearat (GMS) und 10 Gew.-% Kieselsäure in einem Taumelmischer beschichtet.

Das treibmittelhaltige Granulat wurde in einem EPS-Druckvorschäumer der Firma Hirsch mit der Bezeichnung. PREEX 1000 zu Schaumperlen mit minimal erreichbarer Dichte vorgeschäumt. Über ein geeichtes 1 L Messgefäss wurde durch auffüllen zur Messmarke und zurückwiegen die Schüttdichte der vorgeschäumten Perlen bestimmt. Anschließend wurden die Schaumstoffperlen in einem EPS-Formteilautomaten der Firma Erlenbach vom Typ EHV-C -520-420 bei einem Überdruck von 0,9 bar Autoklavbedampfung mit einer Bedampfungszeit von 2,5 Sekunden zu Formteilen verarbeitet. Die Formteile wurden anschließend aufgeschnitten und an der Schnittfläche unter einem Mikroskop die Zellen pro Milimeter über eine geeichte, 1 cm lange Skala ausgezählt. Die Messung wurde 20 mal an verschiedenen Stellen wiederholt und daraus der Mittelwert als Zellen pro mm für die Zellzahl angegeben.

**Tabelle 4: Schäumeigenschaften und Zellstruktur**

| | Standzeit | Pentangehalt | Schaumperlen nach Vorschäumen | | |
|---|---|---|---|---|---|
| | | (flü. Anteile) | Schuttdichte minimal | Zellen | Beurteilung Schaumperle |
| | [h] | [%] | [g/l] | [1/mm] | |
| B1 | 20 | 5,9% | 16,6 | 2,5 | gute Schäumqualität |
| B2 | 20 | 5,7% | 16,3 | 2,8 | gute Schäumqualität |
| B3 | 20 | 5,5% | 21 | 2,6 | gute Schäumqualität |
| B4 | 20 | 2,6% | | | kein Schäumen |
| B5 | 20 | 3,6% | >50 | 3,0 | schlechte Schäumeigenschaften |
| B6 | 7 | 4,6% | 27,1 | 3,2 | gute Schäumqualität |
| B7 | 20 | 9,0% | 18 | 2,6 | gute Schäumqualität |
| B8 | 20 | 4,6% | 38,5 | 1,7 | Mäßige Qualität, inhomogene Zellverteilung |
| B9 | 20 | 4,9% | 22,1 | 3,2 | gute Schäumqualität |
| B10 | 20 | 6,6% | 20,8 | 3,1 | gute Schäumqualität |
| B11 | 20 | 5,1% | 21 | 3,0 | gute Schäumqualität |
| V1 | 3,4 | 6,2% | 31,5 | 3,2 | linsenförmig bis scheibenförmig |
| V2 | 5,8 | 5,7% | 37,3 | 3,1 | unrunde Partikel mit inhomogener Zellstruktur |
| V3 | 5,9 | 6,0% | 58,0 | 3,2 | unrunde Partikel mit inhomogener Zellstruktur |

Die Vergleichsversucht zeigen, dass die Imprägnierung in Suspension zu Agglomeration der Partikel, zu linsenförmigen Minigranulaten oder inhomogenen Zellstrukturen in den vorgeschäumten Schaumstoffpartikel führt. Die mechanischen Eigenschaften der aus den Vergleichsversuchen erhältlichen Schaumstoffformteile sind gegenüber den erfindungsgemäßen Beispielen deutlich schlechter.

## Patentansprüche

1. Verfahren zur Herstellung von expandierbaren, thermoplastischen Polymerpartikeln durch Nachimprägnierung von thermoplastischen Polymerpartikeln, welche mindestens ein Styrolpolymer und mindestens ein Polyolefin enthalten, mit einem Treibmittel, **dadurch gekennzeichnet, dass** die Nachimprägnierung überwiegend in der Gasphase durchgeführt wird.

2. Verfahren nach Anspruch 1, **dadurch gekennzeichnet, dass** als Treibmittel einen aliphatische C₃ - C₇-Kohlenwasserstoff oder Mischungen davon eingesetzt werden.

3. Verfahren nach Anspruch 1 oder 2, **dadurch gekennzeichnet, dass** die Nachimprägnierung bei einer Temperatur im Bereich von 30 bis 80°C und mit einer Begasungsdauer im Bereich von 5 bis 180 Minuten durchgeführt wird.

4. Verfahren nach einem der Ansprüche 1 bis 3, **dadurch gekennzeichnet, dass** die Nachimprägnierung in einer Wirbelschicht durchgeführt wird.

5. Verfahren nach einem der Ansprüche 1 bis 4, **dadurch gekennzeichnet, dass** die zur Nachimprägnierung eingesetzten thermoplastischen Polymerpartikeln Hohlräume mit einem mittleren Durchmesser im Bereich von 0,1 bis 50 µm aufweisen.

6. Verfahren nach einem der Ansprüche 1 bis 5, **dadurch gekennzeichnet, dass** die zur Nachimprägnierung eingesetzten thermoplastischen Polymerpartikeln einen mittleren Durchmesser im Bereich von 0,2 bis 2,5 mm und 50 bis 300 Hohlräume/mm² Querschnittsfläche aufweisen.

7. Verfahren nach Anspruch 5 oder 6, **dadurch gekennzeichnet, dass** die zur Nachimprägnierung eingesetzten thermoplastischen Polymerpartikel eine Schüttdichte im Bereich von 500 bis 590 kg/m³ aufweisen.

8. Verfahren nach einem der Ansprüche 1 bis 7, **dadurch gekennzeichnet, dass** die zur Nachimprägnierung eingesetzten thermoplastischen Polymerpartikel mindestens eine disperse, Polyolefin-reiche Phase P1 und eine kontinuierliche Styrolpolymer-reiche Phase aufweisen.

9. Verfahren nach einem der Ansprüche 1 bis 8, **dadurch gekennzeichnet, dass** die zur Nachimprägnierung eingesetzten thermoplastischen Polymerpartikel
A) 45 bis 98,9 Gewichtsprozent eines Styrolpolymeren,
B1) 1 bis 45 Gewichtsprozent eines Polyolefins mit einem Schmelzpunkt im Bereich von 105 bis 140°C,
B2) 0 bis 25 Gewichtsprozent eines Polyolefins mit einem Schmelzpunkt unter 105°C,
C1) 0,1 bis 25 Gewichtsprozent eines Styrol-Butadien- oder Styrol-Isopren-Blockcopolymeren,
C2) 0 bis 10 Gewichtsprozent eines Styrol-Ethylen-Butylen-Blockcopolymeren, jeweils bezogen auf die eingesetzten thermoplastischen Polymerpartikel, enthalten.

10. Verfahren nach einem der Ansprüche 5 bis 9, **dadurch gekennzeichnet, dass** man die zur Nachimprägnierung eingesetzten Hohlräume enthaltenden Polymerpartikel durch Extrusion einer Polymerschmelze durch eine Düsenplatte und Granulierung in einer flüssigkeitsgefüllten Kammer unter einem Druck im Bereich von 1,5 bis 15 bar, durchführt, wobei die Polymerschmelze
0,1 bis 5 Gew.-% eines Nukleierungsmittels D),
0,01 bis 5 Gew.-% eines die Hohlräume bildenden Gases F), ausgewählt aus Stickstoff, Kohlendioxid, Argon, Helium oder Mischungen davon jeweils bezogen auf die Polymerschmelze, enthält.

11. Verfahren nach Anspruch 10, **dadurch gekennzeichnet, dass** die Polymerschmelze als Nukleierungsmittel D) Talkum, Siliziumdioxid, Mika, Ton, Zeolithe, Calziumcarbonat oder ein Polyethylenwachs enthält.

12. Verfahren nach einem der Ansprüche 1 bis 12, **dadurch gekennzeichnet, dass** die zur Nachimprägnierung eingesetzten thermoplastischen Polymerpartikel mit einem Verarbeitungshilfsmittel beschichtet sind.
